Europäisches Patentamt

European Patent Office

Office européen des brevets

(11) Publication number : **0 467 669 A1**

# (12) EUROPEAN PATENT APPLICATION

(21) Application number : **91306510.8**

(22) Date of filing : **17.07.91**

(51) Int. Cl.⁵ : **G01N 1/24,** G21C 17/025, G21C 17/00

(30) Priority : **20.07.90 GB 9015998**

(43) Date of publication of application :
**22.01.92 Bulletin 92/04**

(84) Designated Contracting States :
**DE FR GB IT**

(71) Applicant : **NNC LIMITED**
**Booths Hall Chelford Road**
**Knutsford Cheshire WA16 8QZ (GB)**

(72) Inventor : **Sinai, Yehuda Louis**
**40 Langdale Road**
**Sale, Manchester, M33 4FL (GB)**

(74) Representative : **George, Sidney Arthur**
**The General Electric Company p.l.c. GEC**
**Patent Department(Wembley Office) Hirst**
**Research Centre East Lane**
**Wembley Middlesex, HA9 7PP (GB)**

(54) **Material sampling.**

(57)   A device for sampling particles of material suspended in a fluid, for example particles of sodium in the cover gas of a sodium-cooled fast nuclear reactor, comprises a sampling tube (2) having an end flange (3) perpendicular to the axis of the sampling tube and a plate (5) spared from the flange and coaxial with, and parallel to, the flange. The suspension enters the sampling tube through the annular aperture (8) formed between the edges of the flange and the plate.

FIG.1.

This invention relates to the sampling of material suspended in a fluid, and particularly to a probe for sampling the material content in a carrying fluid in which a concentration gradient exists, such as in the aerosol of sodium in a cover gas occurring in a nuclear reactor of the sodium-cooled fast reactor type. Such cover gas is an inert gas, such as argon, which does not react with sodium.

In a sodium-cooled fast reactor it is necessary to monitor the concentration and size distribution of sodium particles occurring in the sodium/cover gas aerosol. Suh monitoring is also required in experimental "mock-ups" of reactor equipment. The monitoring is normally effected by drawing samples of the gas into a measuring instrument via a conventional sampling tube, in which the aspiration is simply effected at the open end of the tube.

However, where the particle concentration in the cover gas or other carrying fluid is stratified, the use of a simple open-ended tube for sampling introduces errors into the sample.

It is an object of the present invention to provide an improved device for sampling particles of material suspended in a fluid.

According to the invention there is provided a device for sampling particles of material suspended in a fluid, the device comprising a sampling tube having an end flange substantially perpendicular to the axis of the sampling tube; and a plate spaced from the flange and coaxial therewith and substantially parallel thereto, whereby the suspension enters the sampling tube via an annular aperture formed between edges of the flange and the plate. Preferably the outer edge of the flange and the outer edge of the plate are curved away from the respective planes of the flange and the plate so that the entrance to the annular aperture is flared.

An embodiment of the invention will now be described, by way of example, with reference to the accompanying drawing, in which

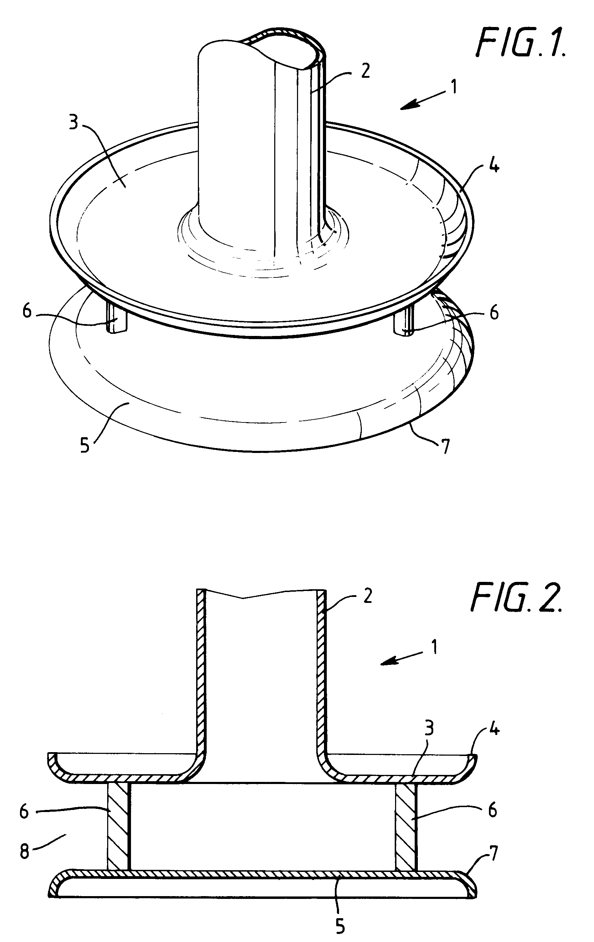

Figure 1 is a schematic pictorial view of a sampling device in accordance with the invention; and

Figure 2 is a sectional view of the device.

Referring to the drawing, a sampling device 1 comprises a sampling tube 2 having a flange 3 attached thereto or formed integrally therewith. The rim 4 of the flange 3 is curved upwardly, as viewed in the figures.

A circular plate 5, coaxial with the flange 3, is attached to the flange and is spaced therefrom by spacers 6, which are preferably streamlined. The rim 7 of the plate is curved downwardly, as viewed in the figures.

The flange 3 and the plate 5 together provide an annular aperture 8 through which the material to be sampled is drawn into the sampling tube. The curved rims 4 and 7 form a flared entry into the aperture.

For use in sampling the sodium/gas aerosol in a sodium-cooled nuclear reactor, the tube 2, the flange 3 and the plate 5 are preferably formed of stainless steel.

In use of the device, the sampling tube 2 is connected to a measuring instrument, such as in impacter, which draws samples of the suspension through the sampling tube.

The annular aperture 8 gives rise to a lower suspension inlet velocity to the sampling tube than would be experienced by use of a simple conventional sampling tube. Suspended particles which are closer to the tube are therefore transported. If the sampling tube is parallel to the concentration gradient in the suspension, this will reduce the inhalation of particles originating from locations distant from the tube.

The device is not limited to use in a nuclear reactor, and may be used for sampling any suspended material, more especially where the carrying fluid is slow-moving or stationary.

## Claims

1. A device for sampling particles of material suspended in a fluid, characterised by a sampling tube (2) having an end flange (3) substantially perpendicular to the axis of the sampling tube; and a plate (5) spaced from the flange and coaxial therewith and substantially parallel thereto, whereby the suspension enters the sampling tube via an annular aperture (8) formed between edges of the flange and the plate.

2. A devire as claimed in Claim 1, characterised in that the outer edge (4) of the flange (3) and the outer edge (7) of the plate (5) are curved away from the respective planes of the flange and the plate so that the entrance to the annular aperture (8) is flared.

3. A device as claimed in Claim 1 or Claim 2, characterised in that the flange (3) is formed integrally with the sampling tube (2).

4. A device as claimed in any preceding claim, characterised in that the flange (3) and the plate (5) are circular.

5. A sodium-cooled nuclear reactor, including a device as claimed in any preceding claim arranged to sample the content of a sodium/cover gas aerosol occurring in the reactor.

FIG.1.

FIG.2.

European Patent
Office

**EUROPEAN SEARCH REPORT**

Application Number

EP 91 30 6510

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | EP-A-0 352 126 (REGENTS OF THE UNIVERSITY OF MINNESOTA) * Column 4, lines 7-34; figures 1,3 * | 1,3,4 | G 01 N 1/24 G 21 C 17/025 G 21 C 17/00 |
| A | US-A-4 461 183 (WEDDING) * Column 3, lines 33-41; column 7, lines 9-15; figure 6 * | 1,2 | |

TECHNICAL FIELDS
SEARCHED (Int. Cl.5)

G 01 N
G 21 C

The present search report has been drawn up for all claims

| Place of search | Date of completion of the search | Examiner |
|---|---|---|
| THE HAGUE | 15-10-1991 | JANDL F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)